# EUROPEAN PATENT SPECIFICATION

(11) **EP 0 649 868 B1**
(45) Date of publication and mention of the grant of the patent: **13.03.2002**
(21) Application number: 94116484.0
(22) Date of filing: 21.12.1988
(51) Int. Cl.: C08J 9/00

(54) **Polymeric compositions**
Polymere-Zusammensetzungen
Compositions polymères

(30) Priority: 05.01.1988 US 140851
(43) Date of publication of application: 26.04.1995
(62) Divisional of application: 88121425.8
(73) Proprietor: NORTON COMPANY, Worcester, MA 01606-2698 (US)
(72) Inventor: Comert, Ahmet, B-4655 Chaineux (BE); Ladang, Michel, B-4651 Herve (BE); Petit, Dominique, B-4512 Housse-Blegny (BE)
(74) Representative: Zimmermann, Gerd Heinrich

(56) References cited:
- EP-A- 0 286 763
- EP-A- 0 293 602
- DE-A- 1 913 683
- DE-C- 883 959
- FR-A- 2 259 146
- FR-A- 2 354 368

## Description

This invention relates to extrudable polymeric compositions exhibiting elastomeric behavior and especially suitable for use as sealants, gaskets, moisture resistant electrically insulating encapsulants, sheet stock and the like.

A wide variety of natural and synthetic rubbers and other elastomers have been used in the prior art for sealing applications generally. For example, Japanese Laid Open Application 59-213,786 published Dec. 2, 1984 discloses compositions comprising 100 parts by weight of urethane foam impregnated with 20-90 parts by weight of a mixture of (a) styrene-butadiene or styrene-isoprene block copolymers, (b) bituminous material and an organic solvent, and, optionally, (c) paraffinic or aromatic hydrocarbon oils, silicon water-repellents and/or defoaming agents, and inorganic fillers.

Japanese Laid Open Application 58-215,334 published Dec. 14, 1983 discloses a "water-swelling sealant" comprising a rubber or plastic compound blended with water swelling polyurethane resin. This blend is mixed with an organic peroxide, molded or extruded to any desired shape, then heated at 100-200°C. to provide a durable water-swelling sealant.

Japanese Laid Open Application 57-092,078 published June 8, 1982 discloses a sealing material comprising a urethane polymer including a polydiene chain in the molecule and having terminal isocyanate groups; this is mixed with a compound containing active hydrogen. This mixture is eventually cured by urethane reaction to form the final elastomer.

The general possibility of polymer blends constituting interpenetrating polymer networks or IPN's has been known since 1969. Work in this field is summarized in the Encyclopedia of Polymer Science and Technology, Supplement Volume 1. The primary practical improvement reported by use of such IPN's has been increased toughness of elastomers and plastics.

The extrudable polymeric compositions produced by the present invention are made by blending at least two components: (a) a first generally non-reactive thermoplastic synthetic polymer with at least moderate flexibility, i.e. a noncrosslinkable elastomer, namely styrene-ethylene-butylene-styrene block copolymer and (b) a second polymer or oligomer having end groups capable of further reaction with one another under the influence of atmospheric moisture, e.g. 10-100% relative humidity for at least 5 minutes, i.e. a primary polymer having a polyester backbone and isocyanate end groups. The materials are extruded into the desired shape in which they are to be finally used while being protected from exposure to moisture or other active hydrogen containing compounds. The shaped article of the materials is then allowed to undergo further reaction under the influence of liquid water or ambient moisture, producing what is believed in the preferred embodiments to be an essentially thermoset IPN structure with excellent resistance to environmental degradation. The blend of materials may be stored in covered drum like containers or sealable plastic bags in a single large mass, or in pellet form for later processing into the desired final product; again here the blend of materials must be protected from moisture during storage.

EP-A-0 326 704, from which the present application is divided, employs a styrene-butadienestyrene block copolymer as the first component (a).

Optional components of the materials according to this invention include plasticizers, accelerators for the cross linking reaction, surfactants, and fillers.

### DESCRIPTION OF THE PREFERRED EMBODIMENTS

The compositions of the present invention fabricate end products which can be substantially foamed due to the time, temperature and amount of moisture to which the compositions are subjected. If the compositions are low in viscosity and exposed to high humidity and temperature e.g. 80°C., then the resulting cured products are highly foamed with relatively large pores or cells. On the other hand, if the viscosity of the compositions is high, the humidity and temperature low, e.g. 23°C., then the resulting products will be essentially non-foamed. In the case where the thermosettable prepolymer reacts through isocyanate group, the end product will always have some degree of foaming or porosity but if the viscosity of the initial mixture of moisture curable and non-crosslinkable elastomer is high, the temperature and humidity low, then the resulting product will have less total porosity and the porosity will be very fine, giving the product the properties of an essentially nonfoamed material. In addition to time, temperature, relative humidity, and viscosity, the amount of cross linkable groups present and the thickness of the piece being fabricated play a role in the properties of the end product. A sheet 0.5 mm thick containing 1.24% free isocyanate groups will fully cure in boiling water in 5 minutes; a 12 mm thick piece will fully cure in 3 weeks exposed to 35-60% relative humidity at room temperature. However, the minimum amount of isocyanate, should be at least about 1% by weight. In addition to sheet material or tape, other commercial products may be fabricated from the compositions of the invention. Ideally suited are such products as sealing gaskets for drum covers, tubing, and sealant-encapsulants about electrical connectors. The compositions of the present invention are also adapted for use in all conventional hot melt adhesive end uses, and as a double sided adhesive tape before it is cured. When the uncured hot melt adhesive or the uncured tape is in place, atmospheric moisture cures the thermosettable component of the mixture resulting in a thermoset flexible adhesive joint with its attendant advantages over the more conventional hot melt adhesives and mounting tapes.

Preferred non-reactive component of the materials according to this invention is Kraton G, a styrene-ethylene-butylene-styrene copolymer from Shell Chemie, Wesseling, Germany.

The preferred reactive component is made by reacting a commercially available polyester material, Dynacoll RP 230 from Dynamit Nobel Chemicals, with a commercially available polyether prepolymer having residual isocyanate groups, Basonat PA 440 from BASF chemicals, in amounts to give a ratio of isocyanate groups to hydroxyl groups of 2.15. Dynacoll RP 230 has a glass transition temperature of -30°C., an OH number of 30 mg of KOH per gram, and viscosities (in Pa seconds) of 40 at 60°C., 10 at 80°C., and 4 at 100°C. Basonat PA 440 has 11 ± 1 % isocyanate groups, a viscosity of 4.0 ± 0.5 Pa sec at 23°C., and a density of 1.09 Mg/m³. In addition to such polyether prepolymers, essentially any molecule carrying two or more isocyanate groups will form the desired polyurethane with any amine or hydroxyl terminated polyester. Examples of such polyisocyanate are paraphenylene diisocyanate, trans-1,4-cyclohexane diisocyanate, 3-isocyanatemethyl-3,3,5-trimethylcyclohexylisocyanate, diphenylmethane diisocyanate, and toluene diisocyanate. When these diisocyanates are used the non-crosslinkable elastomer component of the combination preferably has a molecular weight of from 600 to 5000.

### Example 1 (Comparative)

For this example, Cariflex TR 1107, a styrene-isoprene-styrene block copolymer, was used instead of the Cariflex TR 1102 used for Examples 1-24 in EPA-0 326 704, above. Other properties of Cariflex TR 1107 are: a density of 0.92 Mg/m³ at 23°C.; a fluidity index of 9 g/10 min; a viscosity in solution of 1600 cps; a styrene/butadiene ratio of 14/86; a modulus of rupture of 28 MPa, with 1300 % extension at rupture; a modulus of 0.9 MPa at 300 % extension; and a Shore A Durometer value of 30. (Methods of measurement of these properties were the same as shown above for Cariflex TR 1102.)

Also, Dynacoll RP 220 was used in this example instead of the similar Dynacoll RP 230 used in the above examples of the above European application. Dynacoll RP 220 has a glass transition temperature of -20°C., and viscosities of 110, 25 and 7 Pa sec at 60°C., 80°C., and 100°C. respectively, but otherwise is very similar to Dynacoll RP 230.

A composition of 100 parts by weight Cariflex TR 1107, 50 parts by weight Dynacoll RP 220, and 21.2 parts by weight Basonat PA 440 was blended in two stages; first the latter two components were mixed and allowed to react with each other, then this reacted mixture was blended with the Cariflex. This composition had 76 weight percent unextractable after curing for one hour in boiling water. When allowed to cure spontaneously by exposure to atmospheric moisture, the composition was useful for gasketing and sealing.

### Example 2 (Comparative)

This is an example of a composition using PVC as the unreactive component. The specific type of PVC was Solvic 374 MB, sold by Solvic, S.A., Brussels, Belgium. Another variation of polyester, Dynacoll RP 250, was used to form the reactive component of this composition. RP 250 has a glass transition temperature of -50°C., an OH number of 20 mg of KOH per gram, and viscosities of 15, 6, and 3 Pa sec respectively at temperatures of 60°C., 80°C., and 100°C. Otherwise, it is similar to Dynacolls RP 220 and 230.

The composition in parts by weight was 100 of Solvic 374 MB, 100 of Dynacoll RP 250, and 14.1 of Basonat PA 440. The weight percent unextractable, after cure in boiling water for one hour, was 97. For this measurement tetrahydrofuran was used as the solvent instead of toluene, but otherwise the measurement was made in the same way as already described.

### Example 3 (Comparative)

This example illustrates use of a plasticized PVC as the non-reactive component. The PVC component was Solvic 271 GA. The complete formulation in parts by weight was 100 Solvic 271 GA, 56 diisononyl phthalate, 10 epoxidized soy bean oil, viz. Lankroflex from Lankro Benelux N. V.-S.A., Belgium, 15 whiting, 180 Dynacoll RP 250, and 50.7 Basonat PA 440. After mixing and curing with boiling water as before, 90 weight percent of the sample was unextractable in one hour in boiling tetrahydrofuran.

## Claims

1. A polymeric composition formed from a mixture comprising:
a) a first component which is a styrene-ethylene-butylene-styrene block polymer and is a non-crosslinked elastomer that is not substantially chemically reactive with itself or with the second component (as recited below) in the presence of moisture;
b) a second component which is a primary polymer having a polyester backbone and isocyanate end groups that are capable of chemically reacting with each other in the presence of moisture to form a derivative polymer having a longer average chain length than said primary polymer;
which polymeric composition is formed by intimately mixing said first and said second components, then extruding said mixture, and then curing said mixture by exposure to moisture, wherein said mixture after cure by exposure to moisture forms an essentially thermoset interpenetrating network.

2. The polymeric composition according to claim 1, in the form of a sheet or a tape.

3. The polymeric composition according to claim 1, in the form of tubing.

4. The polymeric composition according to claim 1, in the form of a gasket.

## Patentansprüche

1. Polymerzusammensetzung, gebildet aus einer Mischung umfassend:
a) eine erste Komponente, die ein Styrol-Ethylen-Butylen-Styrol-Blockpolymer ist und ein nicht-vernetztes Elastomer darstellt, welches mit sich selbst oder mit der zweiten Komponente (wie nachstehend angegeben) in Gegenwart von Feuchtigkeit im Wesentlichen nicht chemisch reaktiv ist;
b) eine zweite Komponente, die ein primäres Polymer mit einem Polyestergrundgerüst und Isocyanatendgruppen ist, welche dazu befähigt sind, in Gegenwart von Feuchtigkeit miteinander chemisch zu reagieren, um ein Polymerderivat mit einer längeren durchschnittlichen Kettenlänge als das primäre Polymer zu bilden;
wobei die Polymerzusammensetzung gebildet wird durch inniges Mischen der ersten und zweiten Komponente, dann Extrudieren der Mischung und dann Härten der Mischung durch Aussetzen gegenüber Feuchtigkeit, wobei die Mischung nach dem Härten durch Aussetzen gegenüber Feuchtigkeit ein im Wesentlichen duroplastisches, einander durchdringendes Netzwerk ausbildet.

2. Polymerzusammensetzung gemäß Anspruch 1, in Form einer Folie oder eines Bandes.

3. Polymerzusammensetzung gemäß Anspruch 1, in Form eines Rohrs.

4. Polymerzusammensetzung gemäß Anspruch 1, in Form einer Dichtung.

## Revendications

1. Composition polymère formée à partir d'un mélange comprenant :
a) un premier composant qui est un polymère séquencé styrène-éthylène-butylène-styrène et est un élastomère non réticulé qui n'est sensiblement pas réactif avec lui-même ou avec le second composant (défini ci-après) en présence d'humidité ;
b) un second composant qui est un polymère primaire ayant un squelette polyester et des groupes terminaux isocyanate qui sont capables de réagir chimiquement entre eux en présence d'humidité pour former un dérivé polymère ayant une longueur de chaîne moyenne plus longue que celle dudit polymère primaire ;
laquelle composition polymère est formée en mélangeant intimement lesdits premier et second composants, en extrudant ensuite ledit mélange, puis en durcissant ledit mélange par exposition à l'humidité, ledit mélange, après durcissement par exposition à l'humidité, formant un réseau interpénétrant essentiellement thermodurci.

2. Composition polymère selon la revendication 1, sous la forme d'une feuille ou d'un ruban.

3. Composition polymère selon la revendication 1, sous la forme d'un tube.

4. Composition polymère selon la revendication 1, sous la forme d'un joint d'étanchéité.
